# EUROPEAN PATENT APPLICATION

(11) **EP 3 025 933 A1**
(43) Date of publication of application: **01.06.2016**
(21) Application number: 14840843.8
(22) Date of filing: 21.08.2014
(51) Int. Cl.: B62D 9/02, B60G 21/00, B60K 7/00

(54) **SYSTEM FOR CONTROLLING ROLLING OF VEHICLE AND METHOD THEREFOR**

(30) Priority: 29.08.2013 KR 20130103333
(71) Applicant: Kim, Sung Jin, Samcheok-si, Gangwon-do 245-939 (KR)
(72) Inventor: Kim, Sung Jin, Samcheok-si, Gangwon-do 245-939 (KR)
(74) Representative: Loo, Chi Ching
(86) International application number: PCT/KR2014/007774
(87) International publication number: WO 2015/030425

(57) **Abstract**

The present invention relates to a system for controlling rolling of a vehicle and a method therefor, the system comprising: a control unit for receiving and analyzing a steering signal and a driving signal from a driver of a vehicle having a frame by which the gradient of the vehicle during traveling can be controlled and generating a steering control signal and a driving control signal on the basis of a result value according to the analysis; and a steering unit and a driving unit for controlling a traveling direction and driving of the vehicle according to the steering control signal and the driving control signal received from the control unit, respectively.

## Description

### CROSS-REFERENCE TO RELATED APPLICATION

This application claims under 35 U.S.C. §119(a) the benefit of priority to Korean Patent Application No. 10-2013-0103333 filed on August 29, 2013, the entire contents of which are incorporated herein by reference.

### BACKGROUND

### (a) Technical Field

The present disclosure relates to a system for controlling the rolling of a vehicle and a method therefor which are able to control the steering of a vehicle in such a way to adjust the inclination of the vehicle, and in particular to a system for controlling the rolling of a vehicle and a method therefor wherein the steering of the vehicle can be controlled in such a way that a sill connection plate is provided to connect left and right side sills of the vehicle, by which a wheel and a frame can be inclined in a desired direction during the change of the direction of the vehicle, thus controlling the steering of the vehicle, and a driving motor is provided at each wheel of the vehicle to control the speed of each driving motor, thus controlling the steering of the vehicle.

### (b) Background Art

The necessity on the development of an environmentally friendly future type vehicle or a predetermined transportation means is currently on the rise together with the increasing demand for an enhanced driver's driving convenience and safety. In order to satisfy these needs, a finished vehicle maker and a vehicle component maker are developing related technologies.

In the sector of a vehicle chassis system (a driving, a steering, a suspension, a braking system, etc.), various researches and developments are underway as the performance of each electronic part and a chassis control technology advance more and more. In order to enhance the driving performance of a vehicle, each device and control system are being developed to cooperate each other, not simply combined.

The rolling system is a system which would be applied to an environmental friendly future type vehicle or a predetermined transportation means and in general is formed of a driving motor which is provided at each wheel of the vehicle, a wheel and a frame which are configured to incline based on the change of the driving direction, and a combination of a steering part and a driving part.

The driving direction change of the conventional vehicle can be carried out by rotating leftward or rightward a steering link provided to connect a front axle and a wheel of the vehicle in the direction which is horizontal to the ground. The above described conventional steering method has a problem wherein a centripetal force occurring during the turning of the vehicle may has bad effect on the riding comfort of a driver and passenger, and since the surface of each tire continuously contacts with the ground, and the tires may wear out a lot due to the frictions, thus degrading the durability of the vehicle. According to the conventional technology, since the direction change of the vehicle should be carried out only by rotating the steering link which is connected to the axle, it is impossible to carry out direction changes in response to different variables when the vehicle is driven on the corners.

The Korean Patent Registration Number 0241375 (hereinafter referred to "a prior art") describes the device for compensating the left and right leanings of the vehicle. More specifically, the above-mentioned prior art describes the device for compensating the left and right leanings of the vehicle in such a way that a vehicle speed, a steering angle, a lateral direction inclination of a road and a weight on each wheel are detected during the driving direction changes of the vehicle, and the lateral inclinations of the vehicle can be previously controlled, thus previously minimizing the lateral force that the driver and passenger may feel.

The above described prior art, however, describes that the inclinations of the vehicle can be maintained by simply outputting a compensation signal to an actuator, namely, it does not specifically describe any method to control the inclinations of the vehicle and does not suggest any resolution to other matters related to the durability degradation due to the friction of the tires and the controls during the direction changes of the vehicle.

For this reason, it needs to urgently develop a new vehicle rolling system which is able to resolve the above listed problems.

The present invention has been invented based on the above-mentioned technology background. The present invention is able to satisfy the above mentioned technical needs and provide additional technical components that a person having ordinary skill in the art cannot easily invent.

he present invention has been invented during the procedure to satisfy any technical needs to the vehicle chassis system, and an applicable range thereof is not limited to the vehicle chassis system. In other words, the present invention may be adapted or applied various transportation fields within a range covering the technical concepts which will be described below.

The above information disclosed in this Background section is only for enhancement of understanding of the background of the invention and therefore it may contain information that does not form the prior art that is already known in this country to a person of ordinary skill in the art.

### SUMMARY OF THE DISCLOSURE

The present invention has been made in an effort to solve the above-described problems associated with prior art.

An object of the present invention is to provide a system for controlling the steering of a vehicle in such a way that a frame is provided, which includes a sill connection plate and a sill connection shaft which connect left and right side sills of a vehicle, and the wheels connected to the front and rear axles of the vehicle and the frame are inclined leftward or rightward of the direction vertical to the ground during the rotation of the sill connection shaft, thus controlling the steering of the vehicle.

Another object of the present invention is to provide a system which is able to simultaneously control a vehicle to turn in the horizontal direction with respect to the ground and the inclination of a vehicle body in the vertical direction with respect to the ground when changing the driving direction of the vehicle in such a way to provide a steering link which can be rotated leftward or rightward in the horizontal direction with respect to the ground.

Further another object of the present invention is to provide a system for controlling the steering of a vehicle by controlling the speed of a driving motor in such a way to provide a driving motor and an electronic transmission to each wheel of the vehicle.

Still further another object of the present invention is to provide a system which is able to maintain a stable driving of a vehicle with the aid of a steering control and a driving control in such a way to detect a vehicle state information using a sensor unit and calculate a compensation value with respect to the detected vehicle state information.

Meanwhile, the technical resolutions of the present invention are not limited to the above-mentioned technical resolutions, and various technical resolutions may be further provided within a range wherein a person having ordinary skill in the art can draw from the descriptions of the present invention.

The present invention provides as a means for resolving the above problems a system and method for controlling the rolling of a vehicle, and it is noted that the categories of these inventions are not limited to the expressions used herein the specification, but can be interpreted into various meanings within the scope of the present invention.

Accordingly, in one aspect, the present invention provides a system for controlling the rolling of a vehicle which is formed of a sill connection shaft provided to connect left and right side sills 130 and a sill connection plate 110 of a vehicle and is able to adjust the inclination of the vehicle with the aid of a steering force transferred from a steering unit, a front axle 140 and a rear axle 150 provided to connect a front wheel 170 and a rear wheel 170 and transfer a steering driving force to each wheel 170, and a frame 50 which allows to control the inclination of the vehicle with the aid of the rotation of the sill connection shaft 117, which may include, but is not limited to, a control unit 500 which is able to analyze a steering signal received from a steering operation mechanism 200 and a driving signal received from a driving operation mechanism 400 and generate and transmit a steering control signal and a driving control signal which are used to control the steering unit 100 and the driving unit 300 based on a result value of the analysis; a steering unit 100 which is able to rotate the sill connection shaft 117 in such a way to drive an inclination control motor 185 in response to a steering control signal from the control unit 500 and transfer a steering force to the sill connection shaft 117and is able to control the driving direction of the vehicle in such a way to incline the frame 50 and the wheel 170 leftward or rightward of the driving direction of the vehicle based on the direction vertical to the ground in accordance with a rotation of the sill connection shaft 117; and a driving unit 300 which is able to drive the vehicle in accordance with a driving control signal received from the control unit 500.

In the system for controlling the rolling of the vehicle, the vehicle includes a steering link 160 which is provided to connect each wheel 170 and the axle of the vehicle and can be rotatable leftward or rightward of the driving direction of the vehicle with respect to the direction horizontal to the ground, and the steering unit 100 is able to control the driving direction of the vehicle in such a way to incline the frame and the wheel 170 leftward or rightward of the driving direction of the vehicle with respect to the direction vertical to the ground in accordance with a rotation of the sill connection shaft 117 when controlling the driving direction of the vehicle and is able to control the driving direction of the vehicle in such a way to rotate the steering link 160 leftward or rightward with respect to the direction horizontal to the ground.

Moreover, in the system for controlling the rolling of the vehicle, the vehicle includes a driving motor 310 to transfer a driving force to each wheel 170, and an electronic transmission to control the driving motor 310, and the control unit 500 is able to generate a driving control signal to control the speed of the driving motor 310 of each wheel 170 and transfers it to the driving unit 300, and the driving unit 300 is able to drive the vehicle in such a way to adjust the speed of the driving motor 310 of each wheel in accordance with the received driving control signal.

Furthermore, the driving unit 300 is able to change the driving direction of the vehicle in the leftward direction in such a way that the speed of the driving motor 310 of the left wheel 170 of the vehicle is decreased, and the speed of the driving motor 310 of the right wheel 170 of the vehicle is increased or maintained and is able to change the driving direction of the vehicle in the rightward direction in such a way that the speed of the driving motor 310 of the right wheel 170 of the vehicle is decreased, and the speed of the driving motor 310 of the left wheel 170 of the vehicle is increased or maintained.

In the system for controlling the rolling of the vehicle, the steering unit 100 is able to change the driving direction of the vehicle in the rightward direction in such a way that the frame 50 including the wheel 170 is controlled to incline rightward by rotating the sill connection shaft 117 in the rightward direction of the vehicle body and is able to change the driving direction of the vehicle in the leftward direction in such a way that the frame 50 including the wheel 170 is inclined leftward by rotating the sill connection shaft 117 in the leftward direction of the vehicle body.

Moreover, the system for controlling the rolling of the vehicle may further include a sensor unit which is able to detect a vehicle state information formed of at least one among an inclination, a rotational inertial force, the size of a centrifugal force and an acceleration of the vehicle and transmit the detected information to the control unit 500.

In the system for controlling the rolling of the vehicle, the control unit 500 generates a steering control signal in such a way that if a vehicle state information including the size of a centrifugal force is received from the sensor unit, a difference between the size of the centrifugal force and the previously set reference value is obtained, and a compensation value is calculated for the difference to become zero (0), thus generating a steering control signal, and the steering unit 100 is able to control the inclination of the vehicle by rotating the sill connection shaft 117 in accordance with the steering control signal.

The system for controlling the rolling of the vehicle may further include a tire which is installed at each wheel 170, and the thread of the tire is formed in a semicircular shape which has a predetermined curvature.

In addition, the steering signal and the driving signal are PWM (Pulse Width Modulation) signals.

In the system for controlling the rolling of the vehicle, the steering unit 100 is able to independently control the steering links which are connected to the front axle and the rear axle.

In another aspect, the present invention provides a method for controlling the rolling of a vehicle, which may include, but is not limited to, (a) a step wherein a steering operation mechanism 200 and a driving operation mechanism 400 receive a steering signal and a driving signal and transfer them to a control unit 500; (b) a step wherein the control unit 500 analyzes the received steering signal and driving signal; (c) a step wherein the control unit 500 calculates a data used to change the driving direction of the vehicle and a data used to drive the vehicle and generates a steering control signal and a driving control signal based on the calculated data and transfers them to the steering unit 100 and the driving unit 300; and (d) a step wherein the steering unit 100 controls the driving direction of the vehicle in such a way that the frame including the wheel 170 of the vehicle is inclined leftward or rightward of the driving direction of the vehicle based on the direction vertical to the ground by controlling a sill connection shaft 110 or a steering link 160 in accordance with the received steering control signal or the frame including the wheel 170 of the vehicle is inclined leftward or rightward of the driving direction of the vehicle based on the direction horizontal to the ground, and the driving unit 300 adjusts the speed of a driving motor 310 connected to each wheel 170 in accordance with the received driving control signal.

In further another aspect, the present invention provides a method for controlling the rolling of a vehicle, which may include, but is not limited to, (a) a step wherein a steering operation mechanism 200 and a driving operation mechanism 400 receive a steering signal and a driving signal and transfer them to a control unit 500; (b) a step wherein the control unit 500 analyzes the received steering signal and driving signal; (c) a step wherein the control unit 500 calculates a data used to change the driving direction of the vehicle and a data used to drive the vehicle and generates a steering control signal and a driving control signal based on the calculated data and transfers them to the steering unit 100 and the driving unit 300; (d) a step wherein the steering unit 100 controls the driving direction of the vehicle in such a way to rotate the steering link 160 leftward or rightward of the driving direction of the vehicle based on the direction horizontal to the ground; (e) a step wherein a sensor unit detects the vehicle state information of the vehicle and transmits it to the control unit 500; and (f) a step wherein the control unit 500 generates a steering control signal by calculating a compensation value with respect to the vehicle state information received from the sensor unit, and the steering unit 100 controls the inclination of the vehicle by rotating a sill connection shaft 117 in accordance with the steering control signal.

In the method for controlling the rolling of the vehicle, the vehicle state information may include at least one of a rotational inertial force, an inclination of the vehicle, an acceleration, the size of a centrifugal force of the vehicle, etc.

The system or method for controlling the rolling of the vehicle according to the present invention may further include various technical components within the scope of the present invention by a person having ordinary skill in the art.

### ADVANTAGEOUS EFFECTS

The present invention provides a system for changing the direction of a vehicle in such a way to control the inclinations of a frame and wheels, by means of which the driving safety can be enhanced since the distance between the center of a vehicle body and the ground decreased during the change of the direction of the vehicle.

In the present invention, it is possible to enhance the durability of tires in such a way that the contacting portions between the tires and the ground change in response to the inclination of the vehicle during the change of the direction of the vehicle.

Since the driving direction of the vehicle can be controlled based on the control of the inclination and the steering link of the vehicle, the vehicle steering control can be more effectively carried out as compared to the conventional technology.

In the present invention, the direction of the vehicle can be changed by controlling the driving speed of each wheel, whereupon the steering can be more effectively controlled as compared to the vehicle direction change which is carried using only the steering unit.

In the present invention, a sensor unit can be further provided, which is able to detect a vehicle state information during the change of the direction of the vehicle, and the driving stability of the vehicle can be enhanced in such a way to control the inclination of the vehicle with the aid of the calculated compensated value which may be used to stabilize the vehicle based on the vehicle state information.

The advantageous effects of the present invention are not limited to the above-described effects, and various effects may be further provided within a range where a person having ordinary skill in the art can draw from the descriptions below.

### BRIEF DESCRIPTION OF THE DRAWINGS

The above and other features of the present invention will now be described in detail with reference to certain exemplary embodiments thereof illustrated the accompanying drawings which are given hereinbelow by way of illustration only, and thus are not limitative of the present invention, and wherein:
FIG. 1 is a view illustrating a schematic configuration of a system for controlling the rolling of a vehicle according to an embodiment of the present invention;
FIG. 2 is a plane view schematically illustrating a frame, a steering unit and a driving unit of a vehicle;
FIG. 3 is a view illustrating an exemplary operation wherein a control unit receives a steering signal and a driving signal and transmits to the steering unit and the driving unit;
FIG. 4 is a view illustrating an exemplary structure wherein a sill connection shaft can rotate with the aid of a steering operation unit and a control unit according to an embodiment of the present invention;
FIG. 5 is a view illustrating an exemplary operation wherein an axle, wheels and tires are inclined during the change of the direction of the vehicle according to an exemplary embodiment of the present invention;
FIG. 6 is a view illustrating an exemplary operation wherein a vehicle is inclined in the left or right direction of the vehicle driving direction based on the vertical or horizontal direction with respect to the ground or rotates according to an embodiment of the present invention;
FIG. 7 is a view illustrating a state where the portions contacting with the tires when the vehicle is being driven are classified according to the present invention;
FIG. 8 is a time series flow chart for describing a method for controlling the rolling of a vehicle according to an embodiment of the present invention; and
FIG. 9 is a time series flow chart for describing a method for controlling the rolling of a vehicle according to another embodiment of the present invention.

**Legend of Reference Numbers**

| | |
|---|---|
| 50: Frame | 100: Steering unit |
| 110: Sill connection plate | 115: Metallic member |
| 117: Sill connection shaft | 120: Center sill |
| 130: Side sill | 140: Front axle |
| 150: Rea axle | 160: Steering link |
| 170: Wheel | 175: Joint unit |
| 180: Steering link control motor | |
| 185: Inclination control motor | |
| 200: Steering operation mechanism | |
| 300: Driving unit | 310: Driving motor |
| 400: Driving operation mechanism | |
| 500: Control unit | |

It should be understood that the appended drawings are not necessarily to scale, presenting a somewhat simplified representation of various preferred features illustrative of the basic principles of the invention. The specific design features of the present invention as disclosed herein, including, for example, specific dimensions, orientations, locations, and shapes will be determined in part by the particular intended application and use environment.

In the figures, reference numbers refer to the same or equivalent parts of the present invention throughout the several figures of the drawing.

### DETAILED DESCRIPTION

The system for controlling the rolling of a vehicle and a method therefor according to the present invention will be described with reference to the accompanying drawings. The embodiments below are provided to help a person having ordinary skill in the art to easily understand the technical concepts of the present invention, and the ranges of the embodiments of the present invention are not limited thereto. The components shown in the drawings are illustrated for the sake of easier descriptions of the embodiments of the present invention and may be seen different as compared to the actual components.

Each component below is provided for only illustrative purpose to implement the present invention. In another embodiment of the present invention, another component may be employed without departing from a concept and range of the present invention. Each component may be formed of only a hardware or a software, but various hardware and software may be combined to carry out the same functions.

The term "comprise" means an open expression to simply indicate a predetermined component, and it should not be interpreted as excluding another component.

The term "connected" or "linked" means that a predetermined component may be directly connected to another component or it may be connected thereto via another component.

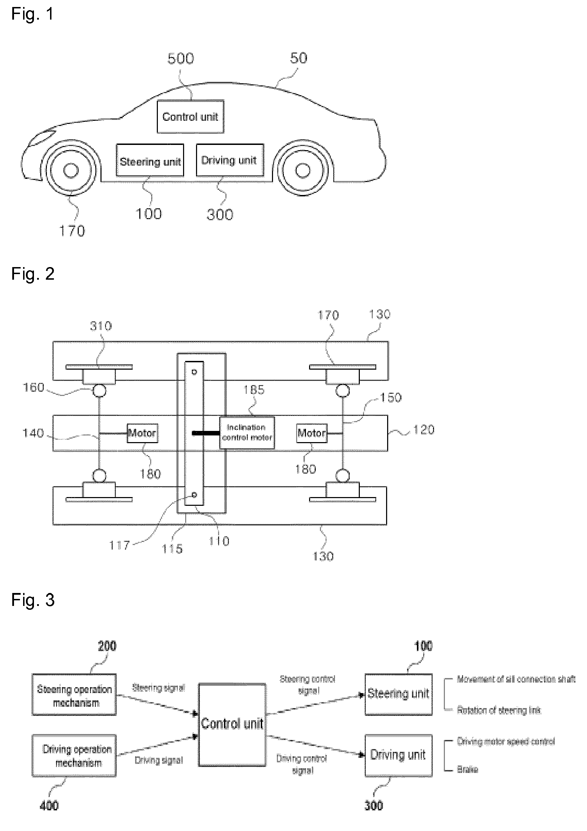

The system for controlling the rolling of a vehicle according to an embodiment of the present invention will be described with reference to FIG. 1.

Referring to FIG. 1, the system for controlling the rolling of the vehicle according to an embodiment of the present invention may include, but is not limited to, a steering unit 100 which is provided to control a driving direction of the vehicle, a driving unit 300 which is provided to control the driving of the vehicle, and a control unit 500 which is provided to control the driving unit 300. The vehicle may equip with a frame which is able to form the type of the vehicle which includes a function.

The steering unit 100 is able to carry out a function to control the driving direction of the vehicle. More specifically, it is able to supply a steering force to the sill connection plate 110 in accordance with a steering control signal received from the control unit 500, thus rotating the sill connection shaft 117, and carry out a function to control the driving direction of the vehicle in such a way to incline the frame 50 including the wheel 170 leftward or rightward of the driving direction of the vehicle based on the vertical direction with respect to the ground.

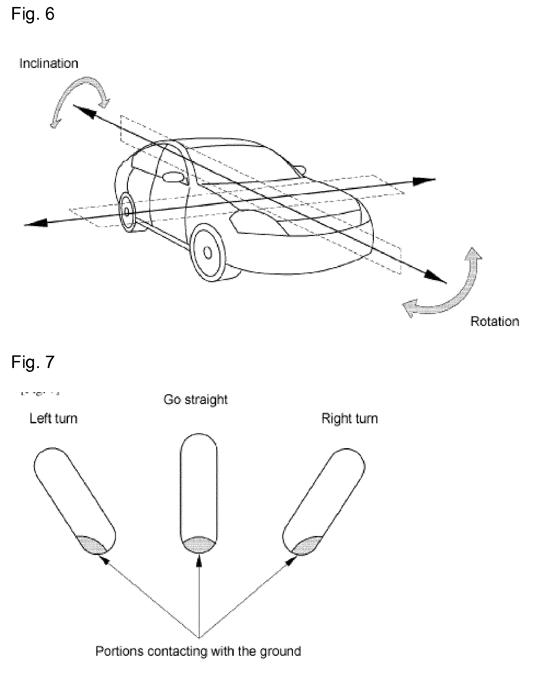

Here, the operation where the wheel is included in the leftward or rightward direction of the driving direction of the vehicle based on the vertical direction with respect to the ground can be easily understood with reference to FIG. 6. More specifically, assuming that there may be a virtual surface which is formed vertical with respect to the ground when it is passing through the center of the vehicle, it means that a corresponding vertical surface is inclined in the leftward or right direction of the driving direction of the vehicle. At this time, the wheel 170 of the vehicle may position parallel with the virtual vertical surface, so the driving direction of the vehicle can be controlled in response to the inclination of the wheel.

The operation where the frame 50 including the wheel 170 is inclined to one side of the driving direction of the vehicle in response to the rotation of the sill connection shaft 117 can be carried out by increasing the angle that the side sills 130 of both sides form with respect to the ground. In case of the rotation of the sill connection shaft 117, the vehicle can be inclined toward one side since the wheel connected to both the front axle 140 and the rear axle 150 of the vehicle can be inclined at the same angle as the angle that the side sill 130 forms with respect to the ground. More specifically, the steering unit 100 will steer the driving direction of the vehicle toward the rightward direction in such a way that the frame 50 including the wheel 170 is inclined toward the right side of the driving direction of the vehicle with respect to the direction vertical to the ground by rotating the side sill 130 in the rightward direction of the vehicle body, and on the contrary the driving direction of the vehicle can be turned toward the leftward direction since the wheel 170 and the frame 50 are inclined toward the leftward direction by rotating the sill connection shaft 117 toward the leftward direction of the vehicle body.

Meanwhile, the front axle 140 and the rear axle 150 may be directly connected to the wheel 170 or they may be connected thereto via a link which may be disposed between each axle and the wheel 170 and is able to rotate in the direction perpendicular to the ground. In case where they are connected by using the link between each axle and the wheel 170, the wheel 170 can be inclined at an angle which is different from the angle that the vehicle is inclined, in response to the rotation of the sill connection shaft 117. Since it is possible to provide a motion freedom larger than the motion of the wheel 170, the driver can more smoothly and stably steer the vehicle when changing the driving direction by using the inclination of the vehicle.

On one hand, the steering unit 100 may include a receiving unit which is able to receive a steering control signal from the control unit 500, and a plurality of driving force transfer units which are able to transfer the force to rotate the sill connection shaft 117 in response to the received steering control signal.

On the other hand, the steering unit 100 is able to control the steering link 160 which connects the wheel 170 and the axle of the vehicle and is rotatable leftward or rightward of the driving direction of the vehicle with respect to the direction horizontal to the ground. When controlling the driving direction of the vehicle, the frame 50 including the wheel 170 is inclined leftward or rightward of the driving direction of the vehicle with respect to the direction vertical to the ground in response to the rotation of the sill connection shaft 117, thus controlling the steering of the vehicle, whereupon the steering of the vehicle can be carried out by rotating the steering link 160 leftward or rightward of the driving direction of the vehicle with respect to the direction horizontal to the ground.

Meanwhile, it is preferred that the angle that the steering link 160 is able to rotate is above 0° and below 90° with respect to the driving direction of the vehicle.

Here, the operation where the steering link 160 rotates leftward or rightward of the driving direction of the vehicle with respect to the direction horizontal to the ground will be described in detail with reference to FIG. 6. Assuming that there may be a virtual surface which is formed horizontal with respect to the ground when it is passing through the center of the vehicle, it means that the steering link 160 disposed in parallel with the corresponding horizontal surface rotates leftward or rightward of the driving direction of the vehicle. Namely, this is basically same as the vehicle steering method of the typical vehicle to steer the vehicle in the leftward or rightward direction.

As described in the above operation, the present invention aims to provide a system wherein the direction change of the vehicle can be carried out with the aid of the inclination in the vertical direction with respect to the ground or the rotation in the direction horizontal to the ground or provide a system which is able to change the driving direction of the vehicle by controlling all the two inclinations and the rotation.

The driving unit 300 will carry out a function to drive the vehicle by supplying the driving force from the inside or outside of the vehicle. More specifically, the driving unit 300 will carry out a function to receive a driving control signal from the control unit 500 and a driving force to drive the vehicle and drive the vehicle in response to the received driving control signal.

Meanwhile, the driving unit 300 may preferably include a receiving unit to receive a driving control signal from the control unit 500, and a plurality of driving force transfer units which are able to transfer force to drive the wheel 170 connected to the front axle 140 and the rear axle 150 in accordance with the received driving control signal when carrying out the driving control function.

Moreover, the vehicle may include a driving motor 310 to individually transfer the driving force to each wheel 170, and an electronic transmission to control the driving motor. The control unit 500 will generate a driving control signal to control the speed of the driving motor 310 connected to each wheel 170 and will transfer the signal to the driving unit 300, and the driving unit 300 may drive the vehicle in such a way to adjust the speed of each driving motor 310 in response to the received driving control signal. Meanwhile, the driving motor may be connected with a suspension device to support the weight of the vehicle and reduce the up and down vibrations of the vehicle. Different from the conventional configuration wherein the driving force generated by one driving motor 310 is transferred to each wheel 170 of the vehicle via a gear or a shaft, the driving motor 310 is provided at each wheel 170, thus individually controlling the wheels 170 of the vehicle. If an independent driving control with respect to each wheel 170 is made possible in such a way to provide the driving motor 310 to each wheel 170, the safety and driving force of the vehicle can be more improved as compared to the conventional driving method. Since the driving force to each wheel 170 can be distributed during the driving, the braking energy recovery due to the recovery braking can be maximized during the braking, whereupon the energy efficiency to drive the vehicle can be maximized. Moreover, If the independent driving control is obtained by providing the driving motor 310 at each wheel, all the power train components which were necessary for the vehicle can be removed, which may result in the simplified structure of the vehicle, and since each wheel 170 can be individually controlled, it is advantageous to effectively adjust the driving, braking and steering of the vehicle.

Moreover, in a state where the independently operable driving motor 310 is provided at each wheel 170 of the vehicle, the driving unit 300 is able to increase the driving motor 310 of the right wheel 170 of the vehicle while reducing the speed of the driving motor 310 of the left wheel 170 of the vehicle, thus making it possible to turn the driving direction of the vehicle toward the leftward direction. In similar ways, the driving direction of the vehicle can be changed toward the right direction.

According to the present invention, the driving direction change of the vehicle can be carried out by any of the methods wherein (i) the vehicle is inclined leftward or rightward of the driving direction of the vehicle based on the direction vertical to the ground, (ii) the vehicle can turn leftward or rightward of the driving direction of the vehicle based on the direction horizontal to the ground, and (iii) the driving speeds of the left wheel 170 and the right wheel 170 of the vehicle are adjusted in a state where the driving motor 310 is individually provided at each wheel 170.

The configuration of the vehicle which will be controlled according to the present invention will be described with reference to FIG. 2.

FIG. 2 is a plane view illustrating a vehicle which equips with a system for controlling the rolling of a vehicle according to an embodiment of the present invention.

As a main component of the frame 500 to control the driving direction of the vehicle based on the inclination of the vehicle, there are a sill connection plate 110 provided to allow the left and right sills 130 of the vehicle to be supported simultaneously movable, and a sill connection shaft 117 which is able to incline the side sill.

The sill means a piece member which is able to support the lower side of a predetermined device. The side sill 130 in the vehicle means a member which is provided at the lower end portions of both sides of the vehicle and is able to support the whole weight of the vehicle. A center sill 120 means a member which is provided between the side sills 130 and is able to support the weight at the central portion of the vehicle. Since the key object of the present invention is to change the driving direction of the vehicle by inclining the vehicle body, the side sill 130 and the center sill 120 are preferably provided separates from each other, whereupon each sill can be individually inclined when the vehicle body is inclined.

Meanwhile, the sill connection plate 110 means a plate which is able to support the side sill 130. It is a connection plate which may allow the side sills 130 at both sides to be simultaneously inclined when the vehicle is inclined to one side. Since a technology wherein a plurality of members arranged in parallel are connected with one connection plate and are inclined in the same direction in terms of their motions would be easily carried out by a person having ordinary skill in the art, the description thereon will be omitted. An additional metallic member may be added to the sill connection plate 110, thus enhancing the strength of the connection portion of the side sills 130.

Meanwhile, the sill connection plate 110 and the side sills 130 are connected via the sill connection shaft 117. If the sill connection shaft 117 rotates by receiving the force from the inclination control motor 185, the left and right side sills 130 will rotate about the sill connection shaft 117, thus inclining the vehicle. More specifically, the sill connection shaft 117 will rotate in response to a steering control signal of the steering unit, whereby the side sills 130 are inclined, thus controlling the driving direction of the vehicle. Here, the driving force that the sill connection shaft 117 needs to rotate can be generated by the inclination control motor 185. The transfer of the driving force can be carried out by the sill connection plate 110.

The transfer of the driving force to rotate the sill connection shaft 117 may be carried by two methods. The first method is to use the driving force transfer shaft and gear which are provided at the sill connection plate 110. If the inclination control motor 185 generates driving force in response to a steering control signal, the driving force can be transferred via the driving force transfer shaft and the gear to the sill connection shaft 117 which is connecting the side sills 130 and the sill connection plate 110. The second method is to provide another axle (a second axle) which is in parallel with the front axle 140 or the rear axle 150 and connect the corresponding axle and the wheel 170 to a joint unit which can be inclined, and transfer the driving force generated by the inclination control motor 185 to the axle. The second method has a difference as compared to the second method in the way that the driving force generated by the inclination control motor 185 is transferred to the joint unit which is connecting each wheel and the second axle. At this time, the function of the joint unit may correspond to the sill connection shaft 117 of the first method, and if necessary, it may be substituted with the sill connection shaft 117.

Meanwhile, the vehicle equips with the front axle 140 and the rear axle 150, and the wheel 170 is provided at both ends of each axle to steer the vehicle as it turns about the shaft and support the weight of the vehicle. According to the embodiment of the present invention, the axle and the wheel 170 may be connected with the steering link 160 being interposed between them. The steering link 160 may include a joint which may rotate in the direction vertical or horizontal with respect to the ground, whereby the vehicle can incline leftward or rightward based on the direction vertical with respect to the ground or can rotate leftward or rightward based on the direction horizontal with respect to the ground.

Moreover, a steering link control motor 180 is connected to the axle so as to transfer driving force which is able to rotate the steering link (A) 160 when the vehicle changes the driving direction based on the direction horizontal with respect to the ground. The steering link control motor 180 may be connected to the front axle 140 or the rear axle 150, thus individually controlling the steering link (B) 160 which is connecting the front axle 140 and the wheel 170. In case where the steering links (A and B) of the front axle 140 and the rear axle 150 are individually controlled, it is possible to greatly reduce the rotation radius as compared to when the vehicle turns by rotating only the steering link (A) 160 of the front axle 140 as in the conventional technology. The movement trajectory of the vehicle may be made to look like a straight line in such a way that the steering links of both the axles are rotated rather than to change the lane by rotating only the steering link of one front axle or one rear axle during the change of the lane. Moreover, it is possible to advantageously reduce any inertial force and instability of the vehicle body which may occur since the vehicle turns along a curved trajectory during the change of the lane.

For example, if it needs to change the lane of the road, the steering unit 100 steers the steering link connected to the front axle to turn 20° in the leftward direction with respect to the driving direction of the vehicle, and steers the steering link connected to the rear axle to turn 20° in the left direction, whereupon the vehicle can change the lane while moving along a trajectory which looks like a straight line, not a curved line.

If the vehicle makes a U-turn on the road, the steering unit 100 steers the steering link connected to the front axle to turn 45° in the leftward direction with respect to the driving direction of the vehicle and steers the steering link connected to the rear axle to turn 45° in the rightward direction, whereby the vehicle can make a U-turn along a smaller rotation trajectory as compared to the conventional technology.

According to another embodiment of the present invention, the wheel 170 may individually equip with a driving motor 310 and an electronic transmission, and each driving motor and electronic transmission are able to individually adjust the driving speed of each wheel 170 in response to a driving control signal generated by the control unit 500.

The flows of various control signals according to an embodiment of the present invention will be described with reference to FIG. 3.

Referring to FIG. 3, the steering signal and the driving signal are transmitted from each steering operation mechanism 200 or driving operation mechanism 400 to the control unit 500, and the control unit 500 will generate a steering control signal or a driving control signal and transmit the generated steering control signal or driving control signal to each steering unit 100 or driving unit 300.

The steering operation mechanism 200 is a mechanism which is able to receive the driving direction of the vehicle based on a driver's intention when the driver wants to change the driving direction of the vehicle. As an example, the steering mechanism 200 may be a handle provided in front of the driver. The method that the steering operation mechanism 200 receives the driving direction of the vehicle from the driver is not limited. The steering operation mechanism 200 may include any component as long as it is able to transfer the driver's intention to change the driving direction of the vehicle. Meanwhile, the steering operation mechanism 200 will convert the driving direction input of the vehicle received from the driver into an electrical signal and transfer it to the control unit 500. The electrical signal may be a PWM (Pulse Width Modulation) signal.

The driving operation mechanism 400 is a mechanism to receive a driving time, a driving speed, etc. of the vehicle in accordance with the driver's intention when the driver is about to give a command on the driving of the vehicle. It may be, for example, an accelerator which is provided in the driver's compartment. The method that the driving operation mechanism 400 receives the command on the driving of the vehicle from the driver is not limited. The steering operation mechanism 400 may include any component as long as it is able to transfer the driver's command on the driving of the vehicle. Meanwhile, the driving operation mechanism 400 may convert the vehicle driving command received by the driver into an electrical signal and transfer to the control unit 500. The electrical signal may be a PWM (Pulse Width Modulation) signal.

Meanwhile, the control unit 500 will carry out a predetermined calculation with respect to the received steering signal or driving signal, thus generating a steering control signal or a driving control signal.

More specifically, the control unit 500 is able to extract from the received steering signal the data, for example, the driving direction of the vehicle which is supposed to change its driving direction, a turning amount, etc. that the driving direction of the vehicle turns. A steering control signal formed of the driving direction of the vehicle, a vehicle body inclination angle, left and right rotation angles of the steering link 160, etc. which are necessary when to change the driving direction of the vehicle can be generated based on the extracted data.

Moreover, the control unit 500 is able to extract from the received driving signal the data, for example, the driving direction of the vehicle, the speed and acceleration of the vehicle, etc., and a driving control signal formed of an information on whether or not the vehicle is currently in the turning section, an output amount necessary for the driving speed and acceleration of the vehicle, the driving speed of the individual wheel 170 necessary for the change of the driving direction of the vehicle, etc. can be generated based on the extracted data.

Meanwhile, the steering unit 100 will change the driving direction of the vehicle by receiving a steering control signal from the control unit 500, which will be carried out in such a way that the sill connection plate 117 is rotated, and the vehicle body including the wheel 170 is inclined leftward or rightward of the driving direction of the vehicle based on the direction vertical with respect to the ground, and the steering link 160 is rotated leftward or rightward of the driving direction of the vehicle based on the direction horizontal with respect to the ground.

Moreover, the driving unit 300 will drive the vehicle by receiving a driving control signal from the control unit 500, which can be caused in such a way to supply a driving force to one or more than one driving motor 310. If the driving motor 310 is multiple in number, the driving unit 300 is able to adjust the driving speed of each driving motor 310 while simultaneously changing the driving direction of the vehicle of the steering unit 100 in accordance with the driving control signal, whereupon the change of the driving direction of the vehicle can be more effectively carried out. For example, if the vehicle is intended to turn in the leftward direction, the direction change to the leftward direction can be carried out by the steering unit 100, and the driving unit 300 will decrease the driving speed of the wheel 170 positioning at the left side of the wheel or increase or maintain the driving speed of the wheel 170 positioning at the right side, whereby the vehicle can be controlled to carry out the turning in the leftward direction.

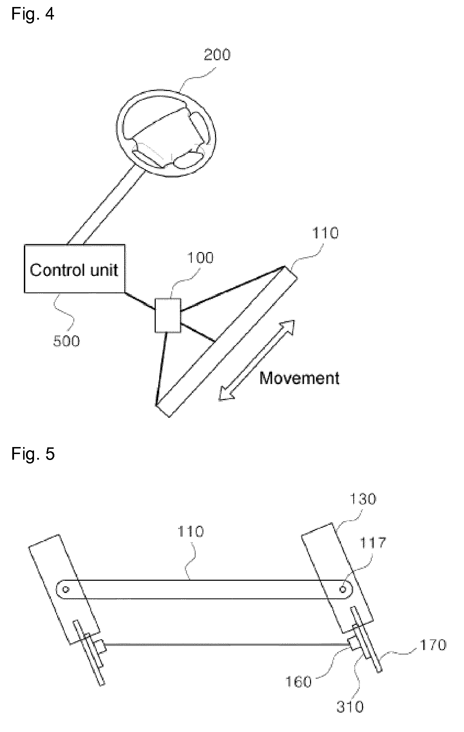

FIG. 4 is a view schematically illustrating a connection relationship between the steering operation mechanism 200, the control unit 500, the steering unit 100 and the sill connection plate 110.

Referring to FIG. 4, since the steering operation mechanism 200 is directly connected to the control unit 50, the input on the driving direction of the vehicle can be transferred. At this time, the transferred input signal will be converted into an electrical signal as mentioned previously and will be transferred as a steering signal. The control unit 500 will generate a steering control signal based on the received steering signal and transfer it to the steering unit 100. The steering unit 100 will transfer a driving force to rotate the sill connection shaft via the sill connection plate 110 based on the received steering control signal, thus rotating the sill connection shaft 117 and controlling the change of the driving direction of the vehicle.

In the embodiment in FIG. 4, it was assumed that the turning of the vehicle is carried out in such a way that the driving direction of the vehicle is inclined leftward or rightward of the driving direction of the vehicle based on the direction vertical with respect to the ground. As mentioned above, based on the changing method of the driving direction of the vehicle, the portions that the steering unit 100 can control may be the sill connection shaft 117, the steering link 160, etc.

FIG. 5 is a view illustrating a state where the frame 50 including the wheel 170 is inclined with respect to the direction vertical to the ground during the driving of the vehicle according to an embodiment of the present invention.

FIG. 7 is a view illustrating a state where the tires are contacting with the ground during the driving of the vehicle according to another embodiment of the present invention.

As illustrated in FIG. 7, the vehicle is driven with the threads (the wide portions between the tires and the ground) being contacting with the ground in a state where the tires are not inclined when the vehicle goes straight. Meanwhile, if the vehicle turns left, the tires will go with a part of the thread as indicated by the dotted line in the drawing as well as a part of the side wall (a side surface) of the tires being contacting with the ground.

Since the portions that the tires are contacting with the ground are different for each driving situation, the wear rates of the tires can be lowered while enhancing resource use efficiency in such a way to minimize the wears of the tires against the ground according to the present invention.

Meanwhile, each of the tires in general is formed in a semicircular shape wherein a thread has a curvature over a predetermined value. In this case, the area that the thread is contacting with the ground may be more decreased, whereupon it is possible to effectively reduce the wear rates of the tires.

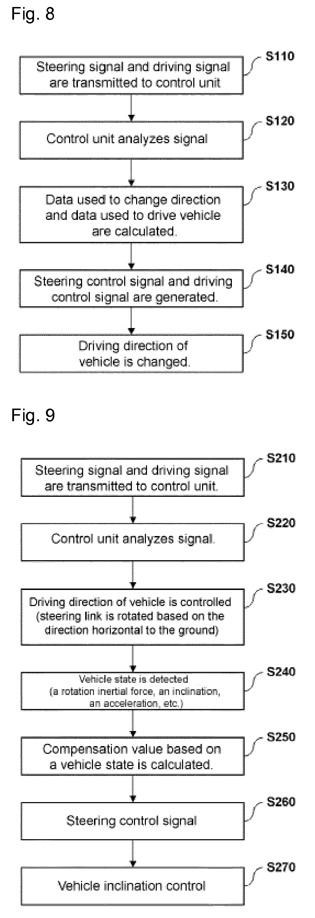

FIG. 8 is a view for describing the method for controlling the rolling of the vehicle according to the present invention.

Referring to FIG. 8, the method for controlling the rolling of the vehicle according to an embodiment of the present invention may include a step S110 wherein the steering operation mechanism 200 and the driving operation mechanism 400 receive a steering control signal and a driving signal and transfer to the control unit 500 (S110). At this time, the steering signal or the driving signal transferred to the control unit 500 may be electrical signal which have been converted in the steering operation mechanism 200 and the driving operation mechanism 400, in particular, they may be PWM (Pulse Width Modulation) signals. The control unit 500 may include a step to analyze the received steering signal and driving signal (S120). The above analysis is to extract the information from the steering signal and the driving signal, which may be necessary to change the driving direction of the vehicle or provide a driving command. In particular, if the signal is a PWM signal, the control unit 500 may be able to extract the information in such a way to analyze a rising edge, a falling edge, a delay, etc. of the transmitted signal.

As a result of the analysis in the step S120, the control unit 500 is able to calculate the driving direction of the vehicle, the data which would be necessary to change the driving direction of the vehicle, for example, the turning amount for the sake of the driving direction of the vehicle, and the data which would be necessary to drive the vehicle, for example, the speed of the driving motor 310. The steering control signal and the driving control signal can be generated based on the calculated data and will be transmitted to the steering unit 100 and the driving unit 300(S130 and S140). At this time, the steering control signal may be formed of the driving direction of the vehicle, the vehicle body inclination angle which is necessary to change the driving direction, and the rotation angle of the steering link 160, etc. The driving control signal may be formed of the information on whether or not the vehicle is currently in the turning section, the output amount necessary for the driving speed and acceleration of the vehicle, and the information, for example, on the driving speed of the individual wheel 170 which is necessary to change the driving direction of the vehicle.

Meanwhile, after the steering unit 100 receives the steering control signal, the steering unit 100 will control the driving direction of the vehicle in such a way to incline the frame 50 including the wheel 170 of the vehicle leftward or rightward of the driving direction of the vehicle based on the direction vertical to the ground or rotating the steering link 160 leftward or rightward of the driving direction of the vehicle based on the direction horizontal to the ground, both the operations of which can be carried out by controlling the sill connection plate 110 or the steering link 160 in response to the received steering control signal. The driving unit 300 will change the driving direction of the vehicle in such a way to adjust the speed of the driving motor 310 connected to the wheel 170 in accordance with the received driving control signal.

FIG. 9 is a view for describing the method for controlling the rolling of the vehicle according to another embodiment of the present invention.

FIG. 9 shows the method for controlling the rolling of the vehicle which is able to minimize any instability due to the rotational inertial force of the vehicle during the operation wherein the driving direction of the vehicle is changed based on the direction horizontal to the ground.

Referring to FIG. 9, the method for controlling the rolling of the vehicle according to an embodiment of the present invention may include a step S210 wherein the steering operation mechanism 200 and the driving operation mechanism 400 receive the steering signal and the driving signal and transfer them to the control unit 500. The control unit 500 will analyze the received signals and will calculate the data to change the driving direction of the vehicle and the data which are necessary for the driving of the vehicle and will generate a steering control signal and a driving control signal based on the calculated data and transfer them to the steering unit 100 and the driving unit 300 (S220).

According to an embodiment of the present invention, the steering unit 100 will control the driving direction of the vehicle by rotating the steering link 160 leftward or rightward of the driving direction of the vehicle based on the direction horizontal to the ground in according to the received steering control signal (S230). More specifically, the present invention is directed to the method for controlling the rolling of the vehicle so as to reduce any instability which might occur due to the rotational inertial force or the centrifugal force when the vehicle is turning in the horizontal direction.

Meanwhile, when the driving direction of the vehicle is being changed in the above manner, the sensor unit may include a step S240 to detect the vehicle state information of the vehicle and transmit it to the control unit 500. The vehicle state information may be formed of the rotational inertial force of the current vehicle, the angle that the vehicle has inclined due to the turning of the vehicle, the acceleration of the vehicle and the level of the centrifugal force. Here, the centrifugal force means an inertial force that in general generates at the turning vehicle and has the same size as the centripetal force and the opposite direction to it. The centrifugal force has a force which is applying in the direction where it moves away from the center of the rotational radius. The unit of the centrifugal force size is N (Newton) or dyn.

Meanwhile, the control unit 500 may include steps S250 to 270 wherein a steering control signal is generated by calculating the compensation value with respect to the vehicle state information, and the steering unit 100 will adjust the inclination of the vehicle by controlling the sill connection plate. At this time, the compensation value means a predetermined value to minimize any instability of the vehicle during the change of the driving direction of the vehicle, more specifically, a value to minimize any change in the inclination of the vehicle due to the centrifugal force. According to the present invention, even though any instability factor occurs during the change of the driving direction of the vehicle, the method for controlling the rolling of the vehicle is able to minimize such an instability factor according to an embodiment of the present invention.

The invention has been described in detail with reference to preferred embodiments thereof. However, it will be appreciated by those skilled in the art that changes may be made in these embodiments without departing from the principles and spirit of the invention, the scope of which is defined in the appended claims and their equivalents.

## Claims

1. A system for controlling the rolling of a vehicle which is formed of a sill connection shaft provided to connect left and right side sills (130) and a sill connection plate (110) of a vehicle and is able to adjust the inclination of the vehicle with the aid of a steering force transferred from a steering unit, a front axle (140) and a rear axle (150) provided to connect a front wheel (170) and a rear wheel (170) and transfer a steering driving force to each wheel (170), and a frame (50) which allows to control the inclination of the vehicle with the aid of the rotation of the sill connection shaft (117), comprising:
a control unit (500) which is able to analyze a steering signal received from a steering operation mechanism (200) and a driving signal received from a driving operation mechanism (400) and generate and transmit a steering control signal and a driving control signal which are used to control the steering unit (100) and the driving unit (300) based on a result value of the analysis;
a steering unit (100) which is able to rotate the sill connection shaft (117) in such a way to drive an inclination control motor (185) in response to a steering control signal from the control unit (500) and transfer a steering force to the sill connection shaft (117) and is able to control the driving direction of the vehicle in such a way to incline the frame (50) and the wheel (170) leftward or rightward of the driving direction of the vehicle based on the direction vertical to the ground in accordance with a rotation of the sill connection shaft (117); and
a driving unit (300) which is able to drive the vehicle in accordance with a driving control signal received from the control unit (500).

2. The system of claim 1, wherein the vehicle includes a steering link (160) which is provided to connect each wheel (170) and the axle of the vehicle and can be rotatable leftward or rightward of the driving direction of the vehicle with respect to the direction horizontal to the ground, and the steering unit (100) is able to control the driving direction of the vehicle in such a way to incline the frame and the wheel (1700 leftward or rightward of the driving direction of the vehicle with respect to the direction vertical to the ground in accordance with a rotation of the sill connection shaft (117) when controlling the driving direction of the vehicle and is able to control the driving direction of the vehicle in such a way to rotate the steering link (160) leftward or rightward with respect to the direction horizontal to the ground.

3. The system of claim 1, wherein the vehicle includes a driving motor (310) to transfer a driving force to each wheel (170), and an electronic transmission to control the driving motor (310), and the control unit (500) is able to generate a driving control signal to control the speed of the driving motor (310) of each wheel (1700 and transfers it to the driving unit (300), and the driving unit (300) is able to drive the vehicle in such a way to adjust the speed of the driving motor (310) of each wheel in accordance with the received driving control signal.

4. The system of claim 3, wherein the driving unit (300) is able to change the driving direction of the vehicle in the leftward direction in such a way that the speed of the driving motor (310) of the left wheel (170) of the vehicle is decreased, and the speed of the driving motor (310) of the right wheel (170) of the vehicle is increased or maintained and is able to change the driving direction of the vehicle in the rightward direction in such a way that the speed of the driving motor (310) of the right wheel (170) of the vehicle is decreased, and the speed of the driving motor (310) of the left wheel (170) of the vehicle is increased or maintained.

5. The system of claim 1, wherein the steering unit (100) is able to change the driving direction of the vehicle in the rightward direction in such a way that the frame (50) including the wheel (1700 is controlled to incline rightward by rotating the sill connection shaft (117) in the rightward direction of the vehicle body and is able to change the driving direction of the vehicle in the leftward direction in such a way that the frame (50) including the wheel (170) is inclined leftward by rotating the sill connection shaft (117) in the leftward direction of the vehicle body.

6. The system of claim 1, further comprising a sensor unit which is able to detect a vehicle state information formed of at least one among an inclination, a rotational inertial force, the size of a centrifugal force and an acceleration of the vehicle and transmit the detected information to the control unit (500).

7. The system of claim 6, wherein the control unit (500) generates a steering control signal in such a way that if a vehicle state information including the size of a centrifugal force is received from the sensor unit, a difference between the size of the centrifugal force and the previously set reference value is obtained, and a compensation value is calculated for the difference to become zero (0), thus generating a steering control signal, and the steering unit (100) is able to control the inclination of the vehicle by rotating the sill connection shaft (1170 in accordance with the steering control signal.

8. The system of claim 1, further comprising:
a tire which is installed at each wheel (170), and the thread of the tire is formed in a semicircular shape which has a predetermined curvature.

9. The system of claim 1, wherein the steering signal and the driving signal are PWM (Pulse Width Modulation) signals.

10. The system of claim 2, wherein the steering unit (100) is able to independently control the steering links which are connected to the front axle and the rear axle.

11. A method for controlling the rolling of a vehicle, comprising:
(a) a step wherein a steering operation mechanism (200) and a driving operation mechanism (400) receive a steering signal and a driving signal and transfer them to a control unit (500);
(b) a step wherein the control unit (500) analyzes the received steering signal and driving signal;
(c) a step wherein the control unit (500) calculates a data used to change the driving direction of the vehicle and a data used to drive the vehicle and generates a steering control signal and a driving control signal based on the calculated data and transfers them to the steering unit (100) and the driving unit (300); and
(d) a step wherein the steering unit (100) controls the driving direction of the vehicle in such a way that the frame including the wheel (170) of the vehicle is inclined leftward or rightward of the driving direction of the vehicle based on the direction vertical to the ground by controlling a sill connection shaft (110) or a steering link (160) in accordance with the received steering control signal or the frame including the wheel (170) of the vehicle is inclined leftward or rightward of the driving direction of the vehicle based on the direction horizontal to the ground, and the driving unit (300) adjusts the speed of a driving motor (310) connected to each wheel (170) in accordance with the received driving control signal.

12. A method for controlling the rolling of a vehicle, comprising:
(a) a step wherein a steering operation mechanism (200) and a driving operation mechanism (400) receive a steering signal and a driving signal and transfer them to a control unit (500);
(b) a step wherein the control unit (500) analyzes the received steering signal and driving signal;
(c) a step wherein the control unit (500) calculates a data used to change the driving direction of the vehicle and a data used to drive the vehicle and generates a steering control signal and a driving control signal based on the calculated data and transfers them to the steering unit (100) and the driving unit (300);
(d) a step wherein the steering unit (100) controls the driving direction of the vehicle in such a way to rotate the steering link (160) leftward or rightward of the driving direction of the vehicle based on the direction horizontal to the ground;
(e) a step wherein a sensor unit detects the vehicle state information of the vehicle and transmits it to the control unit (500); and
(f) a step wherein the control unit (500) generates a steering control signal by calculating a compensation value with respect to the vehicle state information received from the sensor unit, and the steering unit (100) controls the inclination of the vehicle by rotating a sill connection shaft (117) in accordance with the steering control signal.
